# EUROPEAN PATENT SPECIFICATION

(11) **EP 2 619 035 B1**
(45) Date of publication and mention of the grant of the patent: **08.01.2020**
(21) Application number: 11827051.1
(22) Date of filing: 16.09.2011
(51) Int. Cl.: B60P 3/41

(54) **LOAD GATE AND A VEHICLE EQUIPPED WITH SUCH A LOAD GATE**
LASTTÜR UND FAHRZEUG MIT EINER SOLCHEN LASTTÜR
PORTE DE CHARGE ET VÉHICULE DOTÉ DE CETTE PORTE

(30) Priority: 21.09.2010 SE 1050983
(43) Date of publication of application: 31.07.2013
(73) Proprietor: Komatsu Forest AB, 907 04 Umeå (SE)
(72) Inventor: ÅSTRÖM, Anders, S-922 67 Tavelsjö (SE)
(74) Representative: Zacco Sweden AB
(86) International application number: PCT/SE2011/051118
(87) International publication number: WO 2012/039664

(56) References cited:
- DE-U1-202007 002 437
- FI-B- 119 628
- US-A1- 2002 071 753
- US-A1- 2002 071 753
- US-A1- 2010 104 409
- US-B1- 6 368 047

## Description

The present invention concerns a load gate for a vehicle equipped with a grip arrangement that can be pivoted and rotated, preferably a forwarder or similar terrain-going vehicle for the handling of timber. The load gate is intended to improve the overview and monitoring by the operator of the load that is being handled, not only during transport but also during loading and unloading of timber. The load gate is intended to limit a forward part of the load compartment that is part of the vehicle and it includes outer frame sections that, joined at the ends, form a surrounding principally square or rectangular frame, and an inner structure that extends between the frame parts and by which the frame parts are mutually joined. The invention relates also to a vehicle, such as a forwarder, equipped with such a load gate. Such a vehicle is known e.g. from US 2002/071753 A1.

Forwarders and similar types of terrain-going vehicles have a load compartment that is principally limited by horizontal load bunks, vertical stakes and a forward load gate. It is the task of the load gate to divide the load compartment from the grip arrangement that can be pivoted and rotated of the forwarder and from a driver's cabin that is part of the vehicle, the task of the load gate is to protect not only the driver's cabin but also a lifting crane from being impacted by timber or parts of trees that may move in an uncontrolled manner during transport. It is the task of the load gate also to form a covering protection of the load compartment that protects the load during transport when the forwarder is being displaced or driven across terrain. If the terrain is difficult of access or if it consists of closely growing trees, there is a risk that the load of timber will become entangled with, or become stuck in, trees in the terrain. Thus, it is the task of the load gate also to prevent contact between the load of timber in the load compartment and trees or other obstacles in the terrain when the forwarder is driven in its normal direction of travel. In order to prevent contact with obstacles in the terrain, the load gate must be given such a large surface area or such an extent that it extends, with its surrounding outer frame, somewhat outside of the outermost parts of the load of timber.

When transferring timber to and from the load compartment the operator sits in the driver's cabin of the forwarder, which cabin has been rotated to face the load compartment. A major part of the work is carried out with the operator viewing the load compartment through the load gate. In this part, it should be understood that the protective structure of the load gate of joined elements constitutes not only a protection, but also an obstacle that limits the overview of the operator over the load compartment during the work. As a consequence of its extensive inner structure, a load gate is expensive to manufacture, while a number of elements must be joined together. As has been mentioned above, it is important that the load gate cover the complete width of the load, in particular during the transport of timber loads across terrain.

A first purpose of the present invention is, therefore, to achieve a load gate that, without deviating from the requirement of comprehensive protection, improves the overview of the load compartment obtained by the operator from the driver's cabin. A second purpose of the invention is to achieve a load gate, the extent and protective area of which can be simply adapted to the current load compartment.

The first purpose of the invention is achieved through the distinctive features that are specified in the attached claims. Other advantages of the inventions specified above are made clear by the non-independent claims.

The invention will be described below in more detail with reference to the attached drawings, of which:
Figure 1 shows a perspective view of a vehicle for the collection of felled trees, which vehicle is equipped with a load gate according to the invention,
Figure 2 shows a detailed view in perspective of a load gate according to the invention shown in a condition removed from the vehicle that is shown in Figure 1,
Figure 3 shows a detailed view in perspective of a load gate corresponding to the one shown in Figure 2, and
Figure 4 shows a detailed view from the side of a load gate corresponding to the one shown in Figure 2.

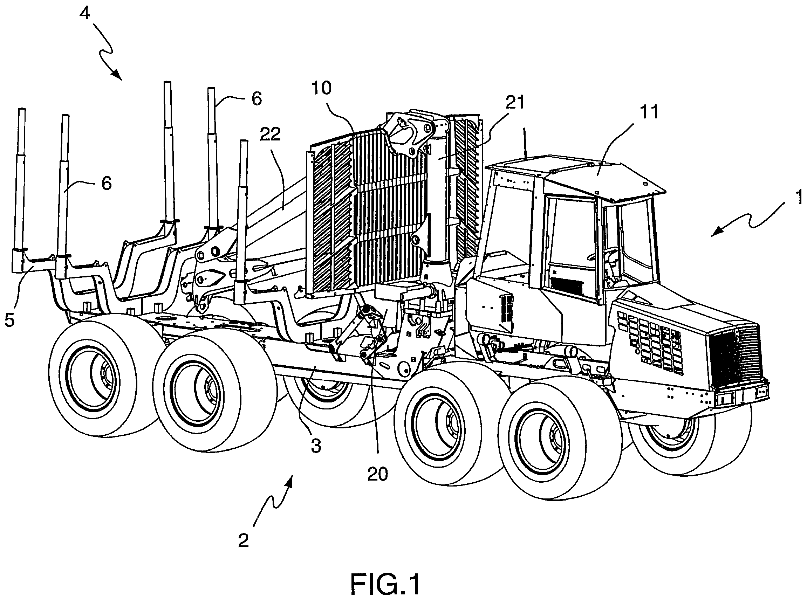

A vehicle is shown in Figure 1 in the form of a terrain-going forwarder that principally consists of a tractor 1 and a load carrier 2. The load carrier 2 is joined to the tractor 1 in a manner that allows pivoting and has a conventional load-bearing chassis provided with wheels and with longitudinal frame beams 3. The load carrier 2 has a load compartment 4 for the reception of timber, and that is limited by horizontal load bunks 5 with the associated vertical stakes 6 that define the long sides of the load compartment. A load gate 10 according to the present invention is arranged at the front end of the load carrier 2. The load gate 10 separates the front short end of the load compartment 4 from a manoeuvrable lift arrangement that is part of the forwarder, and from a driver's cabin 11, from which the operator or driver views the load compartment. The reference number 20 is used to denote a suspension arrangement 20 that supports the load gate 10 on the frame beams of the load carrier. The manoeuvrable lift arrangement of the vehicle includes a two-part crane arm 22 that extends from a base 21 that has the nature of a pillar and a rotator attached at the free end of this crane arm, by means of which rotator a grip arrangement fixed to it and having two opposing forks can be rotated relative to the arm 22 and thereby can the grip arrangement be pivoted in the vertical and the horizontal plane with the aid of the crane arms 22. The load gate 10 arranged on the chassis 3 of the load carrier 2 constitutes a stopper that protects the pillar-like base 21 of the lifting crane and the driver's cabin 11 from impacts from the timber itself, that is located in the load compartment 4. Furthermore, the load gate 10 is used as a stopper against which the end of a bundle of timber logs can be placed in contact under the influence of a force for the directional adjustment and alignment of the bundle during loading.

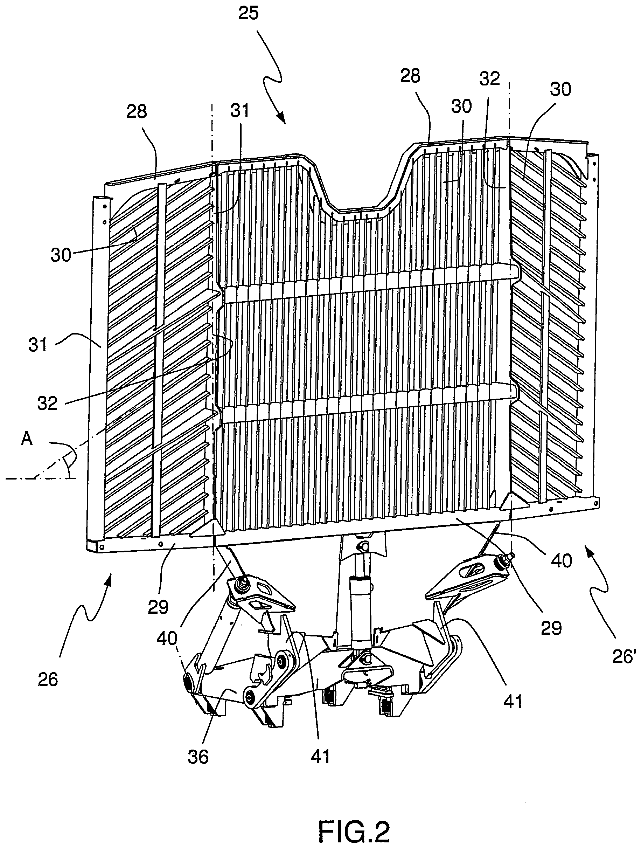

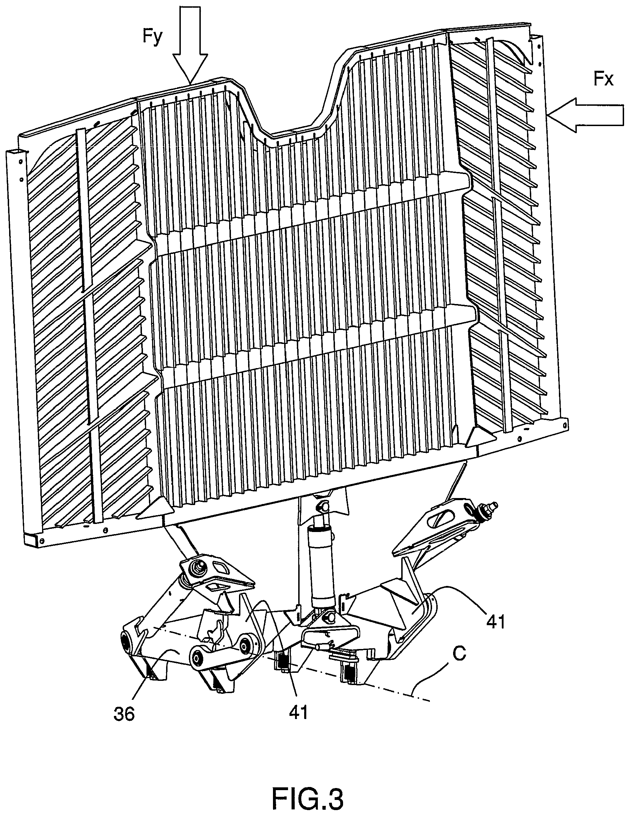

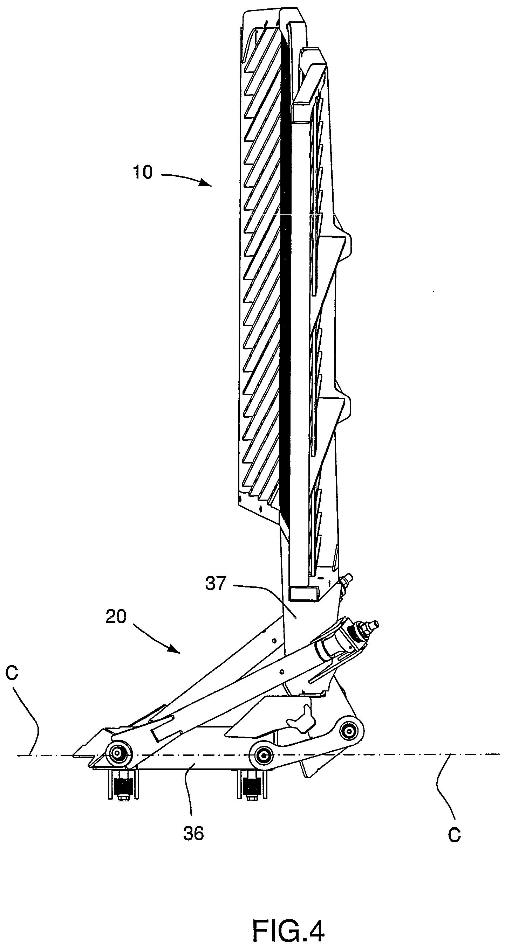

The load gate 10 is shown in Figures 2-4 in views freed from other parts, for reasons of clarity. The load gate 10 has a modular construction with exchangeable parts and it includes a central principal gate section 25 and one side gate section 26, 26' on each side of this, attached by welding. As is most clearly shown by Figure 4, each of the said side gate sections 26, 26' is angled somewhat backwards in the direction towards the load compartment 4 around an axial line 31 that is perpendicular to the longitudinal direction of the gate. In order to demonstrate the resistance that is required against external forces of the type that may arise during collisions between the crane arm 22 and the load gate 10, each such load gate module 25, 26, 26' comprises a number of heavy-duty frame sections of profiled tube, which, joined at the ends, form a surrounding principally square or rectangular frame. In each such module 25, 26, 26', a first pair of parallel opposing frame sections 28, 29 is mutually joined by a series of linear elements that have been set parallel in the form of struts 30 with a flat steel bar form, that as a lattice or grille are evenly distributed at mutual separations from each other between the second pair of parallel opposing frame sections 31, 32. In order to make it easier to see through the inner lattice and in order to obtain an improved capacity to absorb force, the struts 30 with flat steel bar form are oriented with their broader sides facing each other. In order to resist a force from above, from, for example, a crane arm 22 that collides while moving vertically with the upper edge of the load gate 19 (see the arrow Fy showing the force), the struts 30 of the central principal gate 25 extend linearly and essentially vertically between the two horizontal upper and lower frame sections 28, 29 of the central principal gate. In order to resist in a corresponding manner a force from the side, such as the force from, for example, a crane arm 22 that collides while moving horizontally with the side edge of the load gate 10 (see the arrow Fx showing the force), the struts of the relevant side gate section 26, 26' extend essentially horizontally or at a diagonal aspect with only a limited gradient at an angle A to the horizontal plane between the two vertically placed frame sections 31, 32. The term "limited gradient" is here used to denote an angle A that is greater than 0° and less than or equal to 45°. It should be realised that, as a consequence of this design of the structure with transverse struts 30 that mutually unite parallel opposing frame sections in each respective module 25, 26, 26', forces that arise during the collision will be efficiently transferred by the struts from the outer free frame section 28, 31 of a module to a more stable opposing frame section of the module that is located further inside the load gate. The combination of standing or vertical struts 30 for the central principal gate section 25 and lying or horizontal struts 30 for the two side gate sections 26, 26' has the further advantage that the selected different orientation for the inner lattices relative to the orientation of the load bunks 5 and the stakes 6 improves considerably the overview and view of the crane operator over the load compartment from the driver's cabin, without the capacity of the resulting load gate to absorb impacts being negatively affected. The reason for the considerably improved overview into the load compartment from the driver's cabin 11 is, quite simply, that the vertically standing struts of the central principal gate section stand in essentially counter-angled contrast to the lying bunks 5 of the load compartment, and in the same way the lying struts of the side gate sections 26, 26' stand in essentially counter-angled contrast to the standing stakes 6 of the load compartment. By using these contrasts, it will be easier for the operator to distinguish the various parts of the load compartment during the loading and unloading of timber. The both side gate sections 26, 26' with a geometry of diagonally placed linear bracings provides, in addition, an improved view in the vicinity of the machine, and this is a major advantage in dense forestry stands. The geometry has a design that takes into consideration in a natural manner the ability of the eye to cope more adequately with depth vision and to better assess distance in a horizontally linear pattern than in a vertically linear pattern.

Furthermore, the advantage is obtained that the load gate is easy to manufacture, due to its simple design with few component parts. The load gate 10 can, through its modular design, be easily adapted to the various requirements that are placed on the load compartments of various dimensions, through altering the sizes and shapes of the side gate sections 26, 26' with the use of a central principal gate section 25 that is common to these.

The central principal gate section 25 of the load gate 10 is equipped at its bottom with a frame 37 that demonstrates the form of a box whose dimensions decrease in the downwards direction and that is outwardly principally limited by a bottom 38, two principally parallel walls 39 that are joined to the bottom, and two side pieces 40 that are joined to the bottom in a manner that diverges up towards the load gate. Flat suspension plates 41 are, in the design shown, attached facing each other each in the transition between the converging side pieces 40 and the bottom 38 of the frame, at which suspension plates it is intended that the central principal section and thus the complete load gate are to be mounted onto the chassis of the vehicle.

The invention is not limited to what has been described above and shown in the drawings: it can be changed and modified in several different ways within the scope of the innovative concept defined by the attached patent claims.

## Claims

1. A load gate for a vehicle such as a forwarder or similar and intended to limit a front end gable of a load compartment (4) formed from load bunks (5) and stakes (6), and comprising outer frame sections (28, 29, 31, 32) that, joined at their ends, form a surrounding principally square or rectangular outer frame, an inner structure that extends between the frame parts and by which the outer frame sections are mutually joined, and further comprising a central principal gate section (25) and side gate sections (26, 26') arranged on each side of this, and the central principal gate section (25) demonstrating a grille inner structure formed from a number of elements (30) placed in a sequence after each other with a different orientation than that of the load bunks (5) and which extend linearly and are located in a parallel manner with a standing orientation, **characterised in that** the side gate sections (26, 26') demonstrate a grille inner structure formed from a number of elements (30) placed in a sequence after each other with an orientation that differs from that of the stakes (6), and that the elements (30) that form the grille inner structure are linear elements that comprise flat steel bars, the broader sides of which are turned to face each other.

2. The load gate according to claim 1, whereby the side gate sections demonstrate a grille inner structure formed of elements (30) that extend linearly and are located in a parallel manner with a lying orientation or are diagonally placed with an angle (A) that is greater than 0°, and less than or equal to 45° to the horizontal plane.

3. The load gate according to claim 1, whereby not only the central principal gate section (25) but also the two side gate sections (26, 26') are formed from joined frame modules in which each such module comprises a surrounding principally square or rectangular outer frame and a structure that extends between the frame parts of this outer frame and that is formed of elements (30).

4. The load gate according to claim 2, whereby the central principal gate section (25) designed as a frame module and the two side gate sections (26, 26') designed as frame modules constitute separate units that can be joined to each other in a freely chosen manner.

5. The load gate according to any one of claims 1-3, whereby each one of the two side gate sections (26, 26') is angled somewhat backwards in the direction towards the load compartment (4) around an axial line (31) that is perpendicular to the longitudinal direction of the gate,

6. The load gate according to any one of claims 1-4, whereby the central principal gate section (25) comprises a frame (37) that demonstrates the form of a box whose dimensions become smaller in the downwards direction, intended to be attached to a chassis (3) that is a component of the vehicle.

7. A vehicle such as a forwarder or similar vehicle for the collection and transport of felled trees, **characterised in that** it is equipped with a load gate (10) of the type that is specified in any one of claims 1-6.

## Patentansprüche

1. Lasttür für ein Fahrzeug, wie einen Forwarder oder ähnliches, vorgesehen dafür, einen vorderen Endgiebel eines aus Lastquerbäumen (5) und Rungen (6) gebildeten Lastraums (4) zu begrenzen, und umfassend äußere Rahmenabschnitte (28, 29, 31, 32), die an ihren Enden verbunden einen umlaufenden, hauptsächlich quadratischen oder rechteckigen Außenrahmen bilden, eine sich zwischen den Rahmenteilen erstreckende innere Struktur, durch die die äußeren Rahmenabschnitte miteinander verbunden sind, und ferner umfassend einen zentralen Haupttürabschnitt (25) und auf jeder Seite davon angeordnete seitliche Türabschnitte (26, 26'), und wobei der zentrale Haupttürabschnitt (25) eine, aus einer Anzahl von Elementen (30), die in einer anderen Orientierung als die der Lastquerbäume (5) aufeinanderfolgend platziert sind und die sich linear erstrecken und parallel, in einer stehenden Ausrichtung positioniert sind, gebildete Gitterinnenstruktur aufweist, **dadurch gekennzeichnet, dass** die seitlichen Türabschnitte (26, 26') eine aus einer Anzahl von Elementen (30), die in einer anderen Orientierung als die der Rungen (6) aufeinanderfolgend platziert sind, gebildete Gitterinnenstruktur aufweisen, und wobei die die Gitterinnenstruktur bildenden Elemente (30) lineare Elemente sind, die flache Stahlstäbe umfassen, deren breitere Seiten einander zugewandt sind.

2. Lasttür nach Anspruch 1, wobei die seitlichen Türabschnitte eine aus Elementen (30), die sich linear erstrecken und parallel, in einer liegenden Ausrichtung positioniert sind, oder schräg positioniert sind, mit einem Winkel (A), der größer als 0° und kleiner oder gleich 45° zur horizontalen Ebene ist, gebildete Gitterinnenstruktur aufweisen.

3. Lasttür nach Anspruch 1, wobei nicht nur der zentrale Haupttürabschnitt (25), sondern auch die beiden seitlichen Türabschnitte (26, 26') aus verbundenen Rahmenmodulen gebildet sind, wobei jedes solche Modul einen umlaufenden, hauptsächlich quadratischen oder rechteckigen Außenrahmen und eine sich zwischen diesem Außenrahmen erstreckende Rahmenteilen, aus Elementen (30) gebildete Struktur umfasst.

4. Lasttür nach Anspruch 2, wobei der als Rahmenmodul gestaltete zentrale Haupttürabschnitt (25) und die beiden als Rahmenmodule gestalteten seitlichen Türabschnitte (26, 26') separate Einheiten darstellen, die frei wählbar miteinander verbindbar sind.

5. Lasttür nach einem der Ansprüche 1 bis 3, wobei jeder der beiden seitlichen Türabschnitte (26, 26') um eine zur Längsrichtung der Tür senkrechte axiale Linie (31) etwas nach hinten in Richtung auf den Lastraum (4) abgewinkelt ist.

6. Lasttür nach einem der Ansprüche 1 bis 4, wobei der zentrale Haupttürabschnitt (25) einen Rahmen (37) umfasst, der die Form eines Kastens aufweist, dessen Abmessungen in Abwärtsrichtung kleiner werden, der dafür vorgesehen ist, an einem Fahrgestell (3) angebracht zu werden, das Bestandteil des Fahrzeugs ist.

7. Fahrzeug wie ein Forwarder oder ähnliches Fahrzeug zum Sammeln und Transportieren von gefällten Bäumen, **dadurch gekennzeichnet, dass** es mit einer Lasttür (10) der in einem der Ansprüche 1 bis 6 angegebenen Art ausgestattet ist.

## Revendications

1. Porte de charge pour un véhicule tel qu'un porteur ou similaire et destinée à limiter un côté d'extrémité avant d'un compartiment de chargement (4) formé de lits de chargement (5) et de montants (6), et comprenant des sections de cadre extérieures (28, 29, 31, 32) qui, réunies à leurs extrémités, forment un cadre extérieur environnant, principalement carré ou rectangulaire, une structure intérieure qui s'étend entre les parties de cadre et par laquelle les sections de cadre extérieures sont jointes les unes aux autres, et comprenant en outre une section de porte principale et centrale (25) et des sections de porte latérales (26, 26') agencées de chaque côté de celle-ci, et la section de porte principale et centrale (25) présentant une structure intérieure de grille formée d'une pluralité d'éléments (30) placés en séquence les uns après les autres avec une orientation différente de celle des lits de chargement (5) et qui s'étendent linéairement et sont situés de manière parallèle avec une orientation en position debout, **caractérisée en ce que** les sections de porte latérales (26, 26') présentent une structure intérieure de grille formée d'une pluralité d'éléments (30) placés en séquence les uns après les autres avec une orientation différente de celle des montants (6), et que les éléments (30) formant la structure intérieure de grille sont des éléments linéaires comprenant des barres d'acier plates, dont les côtés les plus larges sont tournés pour se faire mutuellement face.

2. Porte de charge selon la revendication 1, dans laquelle les sections de porte latérales présentent une structure intérieure de grille formée d'éléments (30) s'étendant linéairement et situés de manière parallèle avec une orientation couchée ou placés en diagonale avec un angle (A) supérieur à 0° et inférieur ou égal à 45° au plan horizontal.

3. Porte de charge selon la revendication 1, dans laquelle non seulement la section de porte principale centrale (25) mais également les deux sections de porte latérales (26, 26') sont formées à partir de modules de cadre joints dans lesquels chacun de ces modules comprend un cadre extérieur environnant, principalement carré ou rectangulaire, et une structure qui s'étend entre les parties de cadre de ce cadre extérieur et qui est formée d'éléments (30).

4. Porte de charge selon la revendication 2, dans laquelle la section de porte principale et centrale (25) conçue en tant qu'une module de cadre et les deux sections de porte latérales (26, 26') conçues en tant que des modules de cadre constituent des unités séparées pouvant être reliées l'une à l'autre d'une manière librement choisie.

5. Porte de charge selon l'une quelconque des revendications 1 à 3, dans laquelle chacune des deux sections de porte latérales (26, 26') est inclinée légèrement en arrière dans la direction du compartiment de chargement (4) autour d'une ligne axiale (31) qui est perpendiculaire à la direction longitudinale de la porte.

6. Porte de charge selon l'une quelconque des revendications 1 à 4, dans laquelle la section de porte principale centrale (25) comprend un cadre (37) qui présente la forme d'un boîtier dont les dimensions se réduisent dans la direction descendante, destiné à être fixé à un châssis (3) qui fait partie du véhicule.

7. Véhicule tel qu'un porteur ou un véhicule similaire pour la collecte et le transport d'arbres abattus, **caractérisé en ce qu'**il est équipé d'une porte de charge (10) du type spécifié dans l'une quelconque des revendications 1 à 6.
